# EUROPÄISCHE PATENTANMELDUNG

(11) **EP 4 806 815 A1**
(43) Veröffentlichungstag der Anmeldung: **16.09.2026**
(21) Anmeldenummer: 25162679.2
(22) Anmeldetag: 10.03.2025
(51) Int. Cl.: B65G 61/00, B65G 47/244, B65G 47/248, B65G 47/08, B25J 9/16, B65G 1/137

(54) **VERFAHREN ZUM AUTOMATISIERTEN KOMMISSIONIEREN VON PACKSTÜCKEN AUF EINEN LADUNGSTRÄGER, ZUGEHÖRIGES KOM-MISSIONIERSYSTEM UND COMPUTERPROGRAMMPRODUKT**

(71) Anmelder: Swisslog AG, 5033 Buchs/Aarau (CH)
(72) Erfinder: KUPPELWIESER, Stefan, 86609 Donauwörth (DE); HEITZMANN, Jens, 23683 Scharbeutz (DE); FROEHLICH, Andreas, 86681 Fünfstetten (DE); BERND-STRIEBECK, Jens, 45549 Sprockhövel (DE)
(74) Vertreter: Böss, Dieter Alexander

(57) **Zusammenfassung**

Die Erfindung betrifft ein Verfahren zum automatisierten Kommissionieren von Packstücken (1) auf einen Ladungsträger (2), aufweisend die Schritte des automatischen Erstellens eines Packmusters für das Ablegen von Packstücken (1) auf einem vorbestimmten Ladungsträger (2) auf Grundlage einer vorgegebenen Menge an bestimmten Packstücken (1) mittels eines Palettieralgorithmus auf einem elektronischen Rechner (3), des automatischen Sequenzierens der einzelnen Packstücke (1) der vorgegebenen Menge an bestimmten Packstücken (1) in einer zum Aufbauen eines Paketstapels der Packstücke (1) auf dem Ladungsträger (2) in dem erstellten Packmuster geeigneten Reihenfolge und in einer jeweils aufgrund des erstellten Packmusters vorgegebenen Orientierung jeden einzelnen Packstückes (1), und des automatischen Transportierens der Packstücke (1) in der sequenzierten Reihenfolge aus einem Lagerbereich (4) an einen Kommissionierarbeitsplatz (5), an dem die herantransportieren Packstücke gemäß dem erstellten Packmuster auf den Ladungsträger (2) aufzubauen sind, wobei ein automatisches Umorientieren wenigstens eines transportierten sequenzierten Packstücks (1) während des Transportierens oder im Stillstand zwischen einer vorausgehenden Transportbewegung und einer nachfolgenden Transportbewegung, um eine in Transportrichtung (T) weisende erste Drehachse (D1) und/oder um eine quer zur Transportrichtung (T) weisende horizontale zweite Drehachse (D2) erfolgt. Die Erfindung betrifft außerdem ein entsprechendes Kommissioniersystem (7) und ein diesbezügliches Computerprogrammprodukt.

## Beschreibung

Die Erfindung betrifft ein Verfahren zum automatisierten Kommissionieren von Packstücken auf einen Ladungsträger, aufweisend die Schritte des automatischen Erstellens eines Packmusters für das Ablegen von Packstücken auf einem vorbestimmten Ladungsträger auf Grundlage einer vorgegebenen Menge an bestimmten Packstücken mittels eines Palettieralgorithmus auf einem elektronischen Rechner, des automatischen Sequenzierens der einzelnen Packstücke der vorgegebenen Menge an bestimmten Packstücken in einer zum Aufbauen eines Paketstapels der Packstücke auf dem Ladungsträger in dem erstellten Packmuster geeigneten Reihenfolge und in einer jeweils aufgrund des erstellten Packmusters vorgegebenen Orientierung jeden einzelnen Packstückes, und des automatischen Transportierens der Packstücke in der sequenzierten Reihenfolge aus einem Lagerbereich an einen Kommissionierarbeitsplatz, an dem die herantransportieren Packstücke gemäß dem erstellten Packmuster auf den Ladungsträger aufzubauen sind. Die Erfindung betrifft außerdem ein entsprechendes Kommissioniersystem und ein diesbezügliches Computerprogrammprodukt.

Die DE 10 2009 011 287 A1 beschreibt ein heuristisches Verfahren zur automatisierten Palettierung stabiler Paketstapel, mit den Schritten des virtuellen Erzeugens mehrerer Nachfolgekonfigurationen durch Hinzufügen von Paketen zu wenigstens einer Ausgangskonfiguration, des Bewertens dieser Nachfolgekonfigurationen, des Weitererfolgens gut bewerteter Nachfolgekonfigurationen als Ausgangskonfiguration und des Wiederholens dieser Schritte, bis ein Abbruchkriterium erfüllt ist, wobei die Nachfolgekonfigurationen auf Basis von unterschiedlichen Teilstapelhöhen, von Türmen und/oder von Überbauungen bewertet werden.

Aufgabe der Erfindung ist es, ein Verfahren zum automatisierten Kommissionieren von Packstücken auf einen Ladungsträger zu schaffen, mit dem ein Ladungsträger schnell und störungsfrei in einem bestimmten Packmuster mit Packstücken beladen werden kann. Weitere Aufgaben sind die Bereitstellung eines entsprechenden Kommissioniersystems, das Ladungsträger schnell und störungsfrei in einem bestimmten Packmuster mit Packstücken beladen kann und die Bereitstellung eines entsprechenden Computerprogrammprodukts.

Die Aufgabe wird gelöst durch ein Verfahren zum automatisierten Kommissionieren von Packstücken auf einen Ladungsträger, aufweisend die Schritte:
- automatisches Erstellen eines Packmusters für das Ablegen von Packstücken auf einem vorbestimmten Ladungsträger auf Grundlage einer vorgegebenen Menge an bestimmten Packstücken mittels eines Palettieralgorithmus auf einem elektronischen Rechner,
- automatisches Sequenzieren der einzelnen Packstücke der vorgegebenen Menge an bestimmten Packstücken in einer zum Aufbauen eines Paketstapels der Packstücke auf dem Ladungsträger in dem erstellten Packmuster geeigneten Reihenfolge und in einer jeweils aufgrund des erstellten Packmusters vorgegebenen Orientierung jeden einzelnen Packstückes,
- automatisches Transportieren der Packstücke in der sequenzierten Reihenfolge aus einem Lagerbereich an einen Kommissionierarbeitsplatz, an dem die herantransportieren Packstücke gemäß dem erstellten Packmuster auf den Ladungsträger aufzubauen sind,
- automatisches Umorientieren wenigstens eines transportierten sequenzierten Packstücks während des Transportierens, um eine in Transportrichtung weisende erste Drehachse und/oder um eine quer zur Transportrichtung weisende horizontale zweite Drehachse.

Beim automatisierten Kommissionieren von Packstücken, speziell im Bereich der Intralogistik, wird beispielsweise auf Basis eines Kommissionierauftrags, d.h. einer Bestellung, eine angeforderte Menge an Packstücken aus wenigstens einem Lager automatisch entnommen, zu einem Auftrag automatisch zusammengeführt und anschließend gemeinsam auf einen Ladungsträger aufgeladen. Der Ladungsträger, der dann die Menge an bestellten Packstücken umfasst, kann abschließend in den Versandt gegeben werden.

Die Menge an Packstücken kann eine sortenreine Anzahl von identischen Packstücken derselben Artikelart sein. Die Menge an Packstücken kann aber auch eine gemischte Anzahl von verschiedenen Packstücken unterschiedlicher Artikelarten sein. Die unterschiedlichen Artikelarten können sich beispielsweise in der Artikelart, der Handelsgröße und/oder in der Stückzahl von sortenreinen Einzelartikel, die zu einem Gebinde zusammengefasst sind, unterscheiden. Unterschiedliche Artikelarten können sich aus unterschiedlichen Gebindearten ergeben.

Die auf Basis eines Kommissionierauftrags zusammengeführte Menge an Packstücken kann manuell oder automatisch auf dem Ladungsträger aufgebaut werden. Der Ladungsträger kann beispielsweis eine Palette, insbesondere ein Transportpalette, eine Halbpalette, eine Euro-Palette, eine Palette nach US-, ANZ- und/oder UK-Standard, oder ein Rollbehälter sein.

Der Ladungsträger kann beispielsweise eine Transportpalette nach der Norm EN 13698-1 sein. Diese kann auch als Europalette (EPAL) bezeichnet werden. Es kann sich insbesondere um eine Mehrweg-Transportpalette handeln. Die Transportpalette kann wahlweise aus Holz, Metall oder Kunststoff hergestellt sein. Der Transportladungsträger ist insbesondere dazu bestimmt, das Lager bzw. das Kommissioniersystem zu verlassen, um die auf den Transportladungsträger kommissionierten Waren aus dem Lager des Kommissioniersystems auftragsbezogen an einen räumlich entfernten Abnehmer per Luft, Straße und/oder Schiene auszuliefern. Der Versand-Palettierungsbereich bildet insoweit den Warenausgang des Kommissioniersystems.

Ein alternativer Transportladungsträger kann auch ein Rollbehälter, d.h. ein Rollcontainer sein. Derartige Rollbehälter können beispielsweise nach der Norm EN 12674-2 ausgebildet sein. Solche Rollbehälter können eine auf Rollen, insbesondere auch auf Lenkrollen fahrbare Basis aufweisen, welche eine Ablagefläche für Warenträger bildet und die beispielsweise durch zwei gegenüberliegend angeordnete Gitterwände seitliche begrenzt ist.

Um die auf Basis eines Kommissionierauftrags zusammengeführte Menge an Packstücken auf dem Ladungsträger aufzubauen, werden unter anderem Palettieralgorithmen eingesetzt, welche auf einem elektronischen Rechner ablaufen und in Abhängigkeit einer vorbestimmten individuellen Menge an Packstücken ein Packmuster erstellen, d.h. eine Vorschrift zur Anordnung der Packstücke auf dem vorgegebenen Ladungsträger in Form von Packstückstapeln und/oder Packstücktürmen.

Das Packmuster für die Menge an Packstücken kann nach einem oder mehreren unterschiedlichen Kriterien optimiert sein. Beispielshafte Kriterien sind die Stabilität der Stapel oder des Turmes gegen Kippen, die Maximierung der Packungsdichte der Stapel oder des Turmes auf dem Ladungsträger oder die Belastbarkeit einzelner Packstücke zum Tragen weiterer aufgesetzter Packstücke. Ein spezielles Kriterium, nachdem die Menge an Packstücken auf einem Ladungsträger sortiert aufgebaut werden können, kann eine Sortierung der Packstücke auf dem Ladungsträger nach der Reihenfolge sein, in der die beispielsweise von einem Logistikzentrum eines Händlers an eine einzelne Filiale des Händlers ausgelieferter Ladungsträger mit Packstücken in der Filiale in die dortigen Geschäftsregale einzusortieren sind. Demgemäß kann vorgesehen sein, dass die Packstücke derart auf dem Ladungsträger aufgebaut sind, dass ein Mitarbeiter der Filiale den gelieferten Ladungsträger nur ein einziges Mal in einer Richtung entlang einer Regalreihe in der Filiale schieben muss, wobei beispielsweise die zu Beginn zuerst in das vordere Geschäftsregal einzuräumenden Packstücke im Turm oben auf dem Ladungsträger angeordnet sind, die in einem mittleren Wegabschnitt entlang des Geschäftsregals dort in das Geschäftsregal einzuräumenden Packstücke auf einer mittleren Höhe des Ladungsträger angeordnet sind und die am Ende des Weges entlang des Geschäftsregals dort am Ende in das Geschäftsregal einzuräumenden Packstücke auf der niedrigsten Höhe des Ladungsträger angeordnet sind. Dies wäre ein Beispiel eines kundenspezifischen Kriteriums für den Aufbau einer Turm an Packstücken auf dem Ladungsträger.

Die Kriterien zur Erstellung von Packmustern können gemäß anderen Marksegmenten, wie beispielsweise auf Fast Moving Consumer Goods (FMCG), Food & Beverage und Großhändler, sowie alle Arten von Logistikdienstleistern unterschiedlich sein.

Wenn für die auf Basis des Kommissionierauftrags zusammengeführte Menge an Packstücken ein Packmuster bestimmt ist, werden die einzelnen Packstücke der Menge an Packstücken des Kommissionierauftrags in eine Reihenfolge sequenziert, in der die einzelnen Packstücke nacheinander auf den Ladungsträger aufzubauen sind, um das Packmuster auf dem Landungsträger mit den Packstücken zu bilden.

Die Packstücke werden dazu aus dem Lager entnommen und über eine Fördereinrichtung in der sequenzierten Reihenfolge an den Kommissionierarbeitsplatz transportiert, um dort jeweils einzeln oder in Gruppen von mehreren Packstücken durch eine Umsetzeinrichtung auf dem Ladungsträger gemäß dem Packmuster abgestellt zu werden. Das Abstellen der Packstücke auf dem Ladungsträger gemäß dem Packmuster kann statt mittels einer automatischen Umsetzeinrichtung gegebenenfalls auch manuell erfolgen.

Das Packmuster gibt dabei nicht nur die Position auf dem Ladungsträger vor, an der das jeweilige Packstück abgestellt werden soll, sondern das Packmuster gibt auch die Orientierung vor, in der das jeweilige Packstück auf dem Ladungsträger abgestellt werden muss.

Bisher ist es zwar bekannt, die sequenzierten Packstücke, je nach Bedarf wahlweise in einem Längslauf oder in einem Querlauf dem Kommissionierarbeitsplatz zuzuführen. Um ein Packstück von Längslauf in Querlauf oder von Querlauf in Längslauf zu drehen, kommen beispielsweise Drehtische zum Einsatz, welche das jeweilige Packstück um eine vertikale Drehachse um 90 Grad drehen.

Es ist erfindungsgemäß nun vorgesehen, dass die sequenzierten Packstücke bzw. wenigstens ein Packstück der Menge an sequenzierten Packstücken auf dem Weg vom Lager an den Kommissionierarbeitsplatz gegebenenfalls nicht nur um die vertikale Drehachse gedreht wird, sondern während des Transportierens auch um eine in Transportrichtung weisende erste Drehachse und/oder um eine quer zur Transportrichtung weisende horizontale zweite Drehachse automatisch umorientiert wird. In vielerlei Anwendungssituationen kann dies vorteilhaft sein.

Neben dem bekannten Drehen von Packstücken um eine vertikale Drehachse kann ein jeweiliges Packstück zusätzlich oder alternativ um eine in Transportrichtung weisende erste Drehachse und/oder um eine quer zur Transportrichtung weisende horizontale zweite Drehachse umorientiert werden. Bei einem Umorientieren um eine in Transportrichtung weisende erste Drehachse wird das jeweilige Packstück demgemäß im Hinblick auf die Transportrichtung nach links oder nach rechts seitlich gekippt. Bei einem Umorientieren um eine quer zur Transportrichtung weisende horizontale zweite Drehachse wird das jeweilige Packstück demgemäß im Hinblick auf die Transportrichtung nach vorne oder nach hinten umgelegt.

So kann jedes Packstück wahlweise in einer oder mehreren der drei möglichen Orientierungen, welche die räumlichen orthogonalen Orientierungen oder andere davon abweichend ausgewählte Orientierungen sein können, umorientiert werden. Damit kann jedes Packstück im Hinblick auf das Packmuster optimal orientiert dem Ladungsträger bzw. der Umsetzeinrichtung zugeführt werden. So kann das jeweilige Packstück beispielsweise genau in derjenigen Orientierung an den Kommissionierarbeitsplatz herangeführt werden, in der dieses Packstück auf dem Ladungsträger abzusetzen ist. Somit kann ein Umorientieren des Packstücks beispielsweise durch die Umsetzeinrichtung entfallen. Folglich kann die Umsetzeinrichtung gegebenenfalls konstruktiv einfacher konstruiert sein, da die Umsetzeinrichtung dann keinen speziellen Drehfreiheitsgrad benötigt, um ein in der falschen Orientierung ankommendes Packstück in die gemäß dem Packmuster erforderliche Orientierung umorientieren zu müssen. Im Fall eines manuellen Umsetzens durch eine Person entfällt eine ergonomisch ungünstige Drehbewegung, welche die Person ausführen müsste, wenn das Packstück in der falschen Orientierung ankommt und die Person das Packstück umorientieren müsste. Als Kommissionierarbeitsplatz werden auch technische Übergabeplätze, wie beispielsweise Pick-up/Drop-off-Plätze verstanden.

Ein anderes Anwendungsszenario ist es beispielsweise, wenn ein bestimmtes Packstück üblicherweise stehend im Lager gelagert wird und auch gemäß dem Packmuster stehend auf dem Ladungsträger abgestellt werden soll, jedoch die stehende Orientierung des Packstücks für den Transport aus dem Lager an den Kommissionierarbeitsplatz ungünstig ist und ein liegender Transport günstiger, d.h. sicherer wäre. So sind beispielsweise Glasflaschen in einem Flaschenversandkarton vorzugsweise stehend zu lagern und auch stehend auf einen Ladungsträger abzustellen. Allerdings kann ein Transport von Glasflaschen in einem Flaschenversandkarton auf einer Fördereinrichtung in der stehenden Orientierung nachteilig sein. Beispielsweise können die Glasflaschen während des Transports in unerwünschter weise aneinanderstoßen oder der gesamte Flaschenversandkarton kann aufgrund seines hohen Massenschwerpunkt in unerwünschter Weise umfallen, was im schlimmsten Fall zur Zerstörung der Glasflaschen führen kann. Für derartige und ähnliche Packstücke kann beispielsweise ein liegender Transport günstiger sein.

Demgemäß kann ein aus dem Lager kommendes Packstück das sich in einer Ausgangsorientierung befindet, am Anfang der Transportstrecke bzw. am Anfang der Fördereinrichtung automatisch in eine Transportorientierung umorientiert werden, dann in der Transportorientierung bis an den Kommissionierarbeitsplatz automatisch transportiert werden und anschließend am Ende der Transportstrecke bzw. am Ende der Fördereinrichtung automatisch in seine Ausgangsorientierung zurück oder in eine andere Abgabeorientierung gemäß dem Packmuster umorientiert werden.

Auf der anderen Seite kann im Hinblick auf die Lagerhaltung es gegebenenfalls zweckmäßig sein, Packstücke bzw. Artikel in einem Lager generell liegend zu lagern, also möglichst in einer solchen Orientierung zu lagern, dass möglichst die kleinste Seitenlänge des Packstücks vertikal verläuft. So können beispielsweise Lagerebenen eines Lagers, wie beispielsweise eines Pufferlagers, insbesondere eines Kolli-Pufferlagers, oder eines temporären Lagers, wie beispielsweise eins Sequenzers mit einer geringeren Bauhöhe installiert werden, was bedeutet, dass bei gleicher Bauhöhe des Lagers, insbesondere eines Kolli-Pufferlagers, zusätzliche Lagerebenen entstehen können und somit mehr Packstücke bzw. Artikel im Lager vorgehalten werden können.

Aufgrund der neuen Möglichkeit, mit dem Verfahrensschritt des automatischen Umorientierens wenigstens eines transportierten sequenzierten Packstücks während des Transportierens, um eine in Transportrichtung weisende erste Drehachse und/oder um eine quer zur Transportrichtung weisende horizontale zweite Drehachse, kann ein Palettierungsalgorithmus außer einem einzigen Drehfreiheitsgrad für die jeweiligen Packstücke zusätzlich einen zweiten Drehfreiheitsgrad und/oder einen dritten Drehfreiheitsgrad für die jeweiligen Packstücke bei der automatischen Packmustergenerierung berücksichtigen. Es ergeben sich dadurch deutlich mehr kombinatorische Varianten, die im Rahmen von Optimierungsalgorithmen zur Bildung eines optimierten Packmusters berücksichtig werden können.

Eine Weiterentwicklung des Verfahren kann somit vorsehen, dass ein Umorientieren des wenigstens einen transportierten sequenzierten Packstücks während des Transportierens aus seiner Ausgangsorientierung um die in Transportrichtung weisende erste Drehachse und/oder um die quer zur Transportrichtung weisende horizontale zweite Drehachse in eine Zwischenorientierung stattfindet, in der das umorientierte Packstück entlang einer Zwischentransportstrecke weitertransportiert wird und anschließend ein erneutes Umorientieren des wenigstens einen transportierten sequenzierten Packstücks um die in Transportrichtung weisende erste Drehachse und/oder um die quer zur Transportrichtung weisende horizontale zweite Drehachse in die Ausgangsorientierung oder in eine von der Ausgangsorientierung und der Zwischenorientierung verschiedenen Übergabeorientierung am Kommissionierarbeitsplatz durchgeführt wird.

Das automatische Umorientieren des wenigstens einen transportierten sequenzierten Packstücks während des Transportierens, um die in Transportrichtung weisende erste Drehachse und/oder um die quer zur Transportrichtung weisende horizontale zweite Drehachse, kann mittels einer Umorientierungsvorrichtung erfolgen, welche das umzuorientierende Packstück während seiner Transportbewegung oder im Stillstand zwischen einer vorausgehenden Transportbewegung und einer nachfolgenden Transportbewegung auf einer Fördereinrichtung umorientiert. Das automatische Umorientieren muss somit nicht zwingend während einer tatsächlichen Bewegung des Packstücks erfolgen. Vielmehr kann das Packstück auch im Stillstand umorientiert werden, an einer beliebigen Stelle zwischen dem Lager und dem Palettierungsarbeitsplatz, beispielsweise auf einem Tisch zwischen einer anliefernden Fördereinrichtung und einer weiteren abliefernden Fördereinrichtung. Gleichwohl kann das automatische Umorientieren tatsächlich auch in Bewegung des Packstücks erfolgen, beispielsweise wenn das Packstück auf der Fördereinrichtung fährt, gegen einen feststehenden Anschlag fährt, welcher aufgrund der Förderbewegung des Packstücks bewirkt, dass das Packstück umgelegt wird.

Die Fördereinrichtung kann beispielsweise wenigstens eine Förderbahn aufweisen. Die Förderbahn kann beispielsweise von einer Rollenbahn gebildet werden, die eine Vielzahl von in Förderrichtung voneinander beabstandete, drehbare oder drehantreibbare Rollen aufweist. Die Fördereinrichtung kann aber auch wenigstens ein Transportband und/oder wenigstens eine Rutsche oder einen Tisch umfassen. Die Fördereinrichtung kann gegebenenfalls auch von einer Mehrzahl von Fahrzeugen, insbesondere autonom fahrenden und/oder autonom navigierenden Flurförderfahrzeugen oder schienengebundenen Fahrzeugen gebildet werden.

Die Umorientierungsvorrichtung kann beispielsweise ein Umsetzer, eine Kippeinrichtung oder ein verstellbarer Anlaufanschlag sein, welche in den Transport eingreift und auf das gewünschte transportierte, sequenzierte Packstück einwirkt, um es während des Transportierens automatisch um die in Transportrichtung weisende erste Drehachse und/oder um die quer zur Transportrichtung weisende horizontale zweite Drehachse umzukippen oder umzulegen.

Als die Umorientierungsvorrichtung kann ein automatisch gehandhabter Greifer verwendet werden, der das Packstück von der Fördereinrichtung anhebt oder auf der Fördereinrichtung abstützend greift und abkippt, durch eine Greifbewegung umorientiert und in der geänderten Orientierung wieder auf der Fördereinrichtung ablegt. Das Packstück kann demgemäß beispielsweise durch den Greifer in einem oberen Bereich des Packstücks erfasst werden, ohne dass das Packstück vollständig angehoben, sondern nur fassend festgehalten wird und weiterhin mit einer Kante des Packstücks auf der Fördereinrichtung stehend durch den Greifer geführt und/oder gedreht wird, um beispielsweise ein Stehendes Packstück umzulegen, oder ein liegendes Packstück aufzustellen.

Der Greifer kann ein an der Transportstrecke positionierter Mechanismus sein, der eindimensionale oder zweidimensionale Bewegungen ausführen kann. Alternativ kann der Greifer an einem Werkzeugflansch eines in mehreren Achse beweglichen Roboterarms befestigt sein, wobei die Gelenkwinkelkonfiguration des Roboterarms automatisch einstellbar sein kann, um den Greifer im Raum automatisch zu bewegen. Der Greifer kann beispielsweise als ein Backengreifer ausgebildet sein, der wenigstens zwei gegeneinander automatisch verstellbare Greiferbacken aufweisen kann, zwischen denen ein Packstück gefasst werden kann, um das Packstück durch eine entsprechende Bewegung des Greifers umzuorientieren.

Alternativ zu einer Umorientierungsvorrichtung kann das automatische Umorientieren des wenigstens einen transportierten sequenzierten Packstücks um die in Transportrichtung weisende erste Drehachse und/oder um die quer zur Transportrichtung weisende horizontale zweite Drehachse, mittels einer Umsetzvorrichtung erfolgen, welche das umzuorientierende Packstück an dem Kommissionierarbeitsplatz von einer Fördereinrichtung entnimmt, um es auf den Ladungsträger umzusetzen, und die Umsetzvorrichtung das erfasste Packstück während des Umsetzens umorientiert.

Als die Umsetzvorrichtung kann ein automatisch angesteuerter Roboterarm verwendet werden, der das Packstück von der Fördereinrichtung entnimmt, durch eine automatische Änderung der Pose des Roboterarms das Packstück umorientiert und in der geänderten Orientierung auf die Fördereinrichtung oder auf den Ladungsträger absetzt.

Eine spezielle Ausführungsvariante des Verfahren kann gekennzeichnet sein durch die zusätzlichen Schritte:
- automatisches Transportieren der Packstücke in der sequenzierten Reihenfolge und in einer jeweils vorgegebenen Orientierung jeden einzelnen Packstückes aus einem Lagerbereich an einen Kommissionierarbeitsplatz, an dem die herantransportieren Packstücke gemäß dem erstellten Packmuster auf den Ladungsträger aufzubauen sind,
- Ausselektieren wenigstens eines einzelnen Packstückes aus der sequenzierten Reihenfolge während des automatischen Transportierens der Packstücke und Entfernen des wenigstens einen ausselektierten Packstückes aus der transportierten sequenzierten Reihenfolge an Packstücken,
- automatisches Neuerstellen eines geänderten Packmusters für das Ablegen der transportierten sequenzierten Packstücke ohne das wenigsten eine ausselektierte Packstück auf dem Ladungsträger mittels des Palettieralgorithmus auf dem elektronischen Rechner unter einer Neuberechnung der Orientierung der auf dem Ladungsträger abzulegenden Packstücke,
- automatisches Umorientieren des wenigstens einen transportierten sequenzierten Packstücks während des Transportierens gemäß der neuberechneten Orientierung des betreffenden einzelnen Packstückes.

Ein Ausselektieren wenigstens eines einzelnen Packstückes aus der sequenzierten Reihenfolge während des automatischen Transportierens der Packstücke und ein Entfernen des wenigstens einen ausselektierten Packstückes aus der transportierten sequenzierten Reihenfolge an Packstücken, kann beispielsweise erforderlich sein, wenn ein einzelnes Packstück während des Transports beschädigt wird und daher nicht mehr auf den Ladungsträger abgelegt werden soll nicht mehr abgelegt werden kann.

Da nun ein gemäß dem bisherigen Packmuster vorgesehenes Packstück für das Bilden der Stapel bzw. des Turmes auf dem Ladungsträger fehlt, und die sonstigen Packstücke bereits auf dem Transportweg zum Kommissionierarbeitsplatz sind und das bisherige Packmuster gegebenenfalls nicht mehr aufgebaut werden kann, kann es zweckmäßig sein eine Neuberechnung eines veränderten Packmusters vorzunehmen, und zwar auf Basis einer Menge an Packstücken ohne das ausselektierte Packstück.

Da in einem solchen Falle bei einer Neuberechnung eines neuen Packmusters jedoch die sequenzierte Reihenfolge der erhalten gebliebenen Packstücke bereits feststeht und insoweit vorgegeben ist, sind die Möglichkeiten einer Neuberechnung eines neuen Packmusters begrenzt. Hier kann nun erfindungsgemäß bei der Neuberechnung des neuen Packmusters berücksichtigt werden, dass den bereits sequenzierten Packstücken jeweils eine neue Orientierung zugeordnet wird, die gegebenenfalls günstiger ist und eine durch den Ausfall eines bestimmten Packstücks entstandene Lücke durch das umorientierte Packstück zumindest teilweise oder sogar vollständig ausgefüllt werden kann. Eine dadurch erreichte Vergrößerung der Varianten für die Orientierungen der bereits sequenzierten Packstücke bei der Neubildung eines neuen Packmusters kann die Einschränkungen der Varianten für die Packmusterbildung aufgrund der festgelegten Sequenz der Packstücke zumindest teilweise oder vollständig kompensieren oder sogar noch mehr Varianten für die Neubildung eines neuen Packmusters ermöglichen.

Das automatische Neuerstellen des geänderten Packmusters für das Ablegen der transportierten sequenzierten Packstücke ohne das wenigsten eine ausselektierte Packstück auf dem Ladungsträger kann somit unter Beibehaltung der bereits sequenzierten Reihenfolge der transportierten sequenzierten Packstücke erfolgen.

Die Aufgabe wird auch gelöst durch ein Kommissioniersystem, aufweisend ein Lager, einen Kommissionierarbeitsplatz mit einem Ladungsträger, eine Umorientierungsvorrichtung und/oder eine Umsetzvorrichtung, sowie eine Fördereinrichtung, die ausgebildet ist zum automatischen Transportieren von Packstücken aus dem Lager an den Kommissionierarbeitsplatz und eine Kommissioniersteuerung mit einem elektronischen Rechner, der eingerichtet ist mittels eines Palettierungsalgorithmus Packmuster für das Ablegen von Packstücken auf dem Ladungsträger automatisch zu erstellen, wobei die Kommissioniersteuerung ausgebildet und eingerichtet ist, ein Verfahren nach einem der beschriebenen Ausführungen durchzuführen.

Die Aufgabe wird außerdem gelöst durch ein Computerprogrammprodukt, aufweisend einen maschinenlesbaren Träger, auf dem Programmcode gespeichert ist, der von einer Kommissioniersteuerung eines Kommissioniersystems, insbesondere eines Kommissioniersystems nach einer der beschriebenen Ausführungen, auslesbar ist und der die Kommissioniersteuerung ausbildet und/oder einrichtet, ein Verfahren nach einem der beschriebenen Ausführungen durchzuführen, wenn der Programmcode von der Kommissioniersteuerung ausgeführt wird.

Das Computerprogrammprodukt kann beispielsweise eine CD, eine DVD oder ein USB-Stick sein. Das Computerprogrammprodukt kann aber auch eine Steuerungskarte sein, auf der Mikroprozessoren eingebunden sind. Das Computerprogrammprodukt kann jedoch auch in Form eines Downloads realisiert sein, der über das Internet oder ein anderes Netzwerk angeboten und verkauft werden kann.

Der maschinenlesbare Träger kann somit eine CD, eine DVD oder ein Mikroprozessor sein, auf dem der Programmcode gespeichert ist. Der maschinenlesbare Träger kann aber auch eine Festplatte oder ein SSD-Laufwerk sein, auf das der Programmcode heruntergeladen wurde, beispielsweise mittels eines Downloads, insbesondere in Form von Datenpaketen.

Der Programmcode kann durch ein editiertes Programm und/oder Daten repräsentiert sein, die auf dem maschinenlesbaren Träger gespeichert sind.

Durch ein Auslesen des editierten Programms und/oder der Daten wird die auslesende Kommissioniersteuerung ausgebildet und/oder eingerichtet, das erfindungsgemäße Verfahren ausführen zu können, indem sie das erfindungsgemäße Kommissioniersystem ansteuert, um die Packstücke entsprechend umzuorientieren.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, vorteilhafte Merkmale von alternativen Ausführungsvarianten der Erfindung darstellen.

Es zeigen:

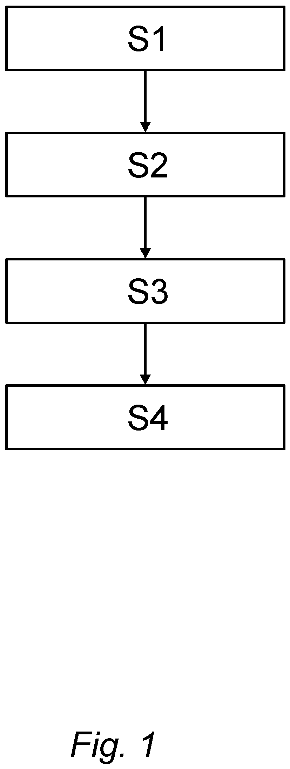

- Fig. 1: ein Flussdiagramm der Schritte in dem grundlegenden erfindungsgemäßen Verfahren,

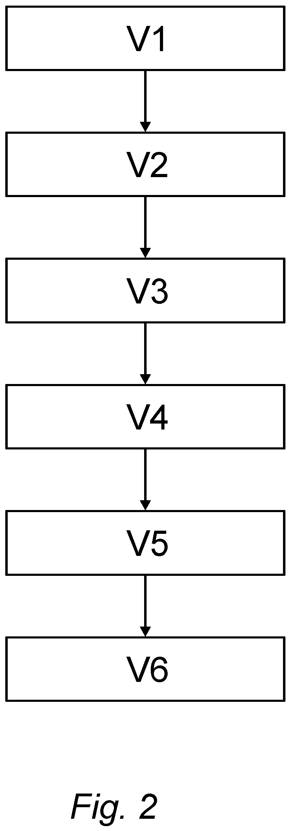

- Fig. 2: ein Flussdiagramm der Schritte in einer speziellen Ausführungsvariante des erfindungsgemäßen Verfahrens,

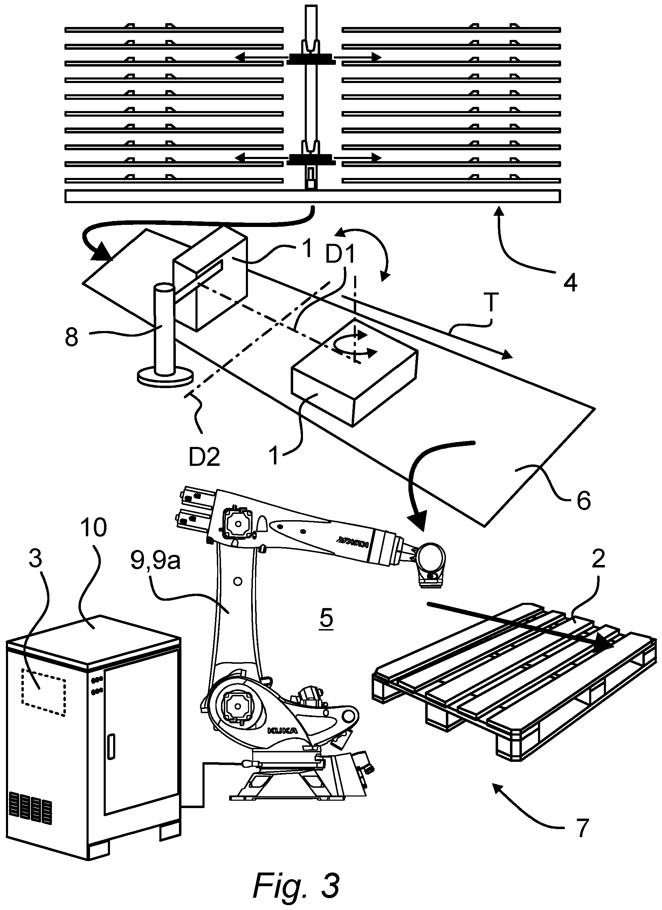

- Fig. 3: eine schematische Darstellung eines beispielhaften erfindungsgemäßen Kommissioniersystems mit einem beispielhaften Packstück während seines Transports auf einer Fördereinrichtung mit einer Umorientierungsvorrichtung, die das Packstück um eine in Transportrichtung weisende erste Drehachse auf der Fördereinrichtung umorientiert,

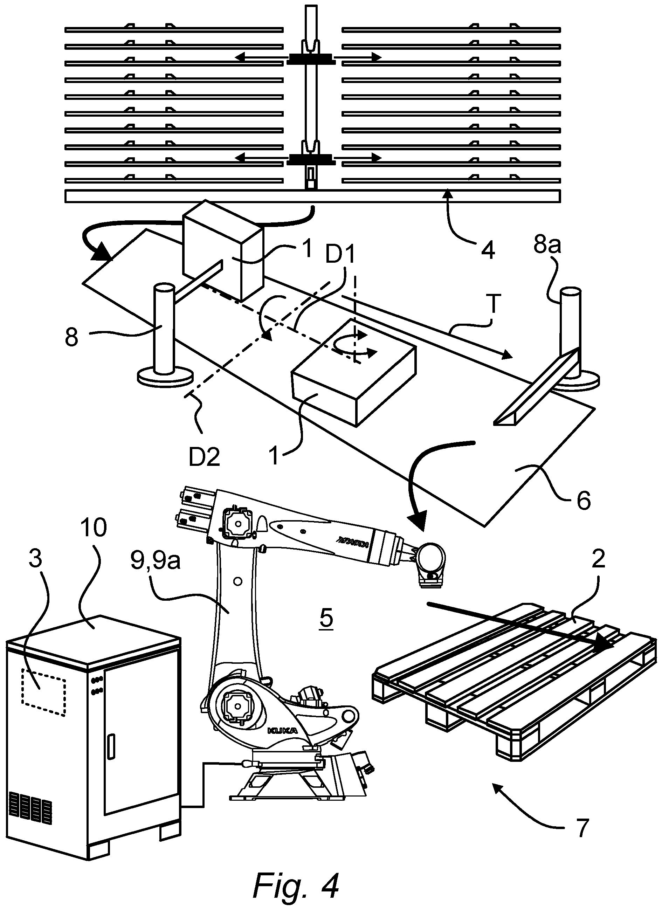

- Fig. 4: eine schematische Darstellung des beispielhaften erfindungsgemäßen Kommissioniersystems mit dem beispielhaften Packstück während seines Transports auf der Fördereinrichtung mit der Umorientierungsvorrichtung, die das Packstück um eine quer zur Transportrichtung weisende horizontale zweite Drehachse auf der Fördereinrichtung umorientiert, und

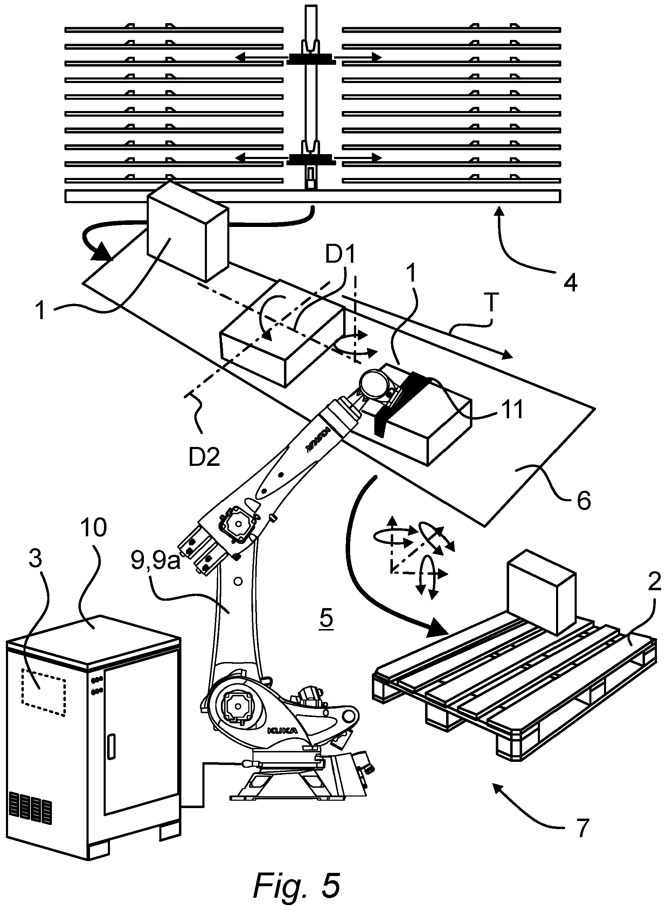

- Fig. 5: eine schematische Darstellung eines beispielhaften erfindungsgemäßen Kommissioniersystems mit einem beispielhaften Packstück während einer Übergabe von der Fördereinrichtung auf einen Ladungsträger mittels einer als Roboterarm ausgebildeten Umsetzvorrichtung mit einem Umorientieren des umzusetzenden Packstücks um die in Transportrichtung weisende erste Drehachse und/oder um die quer zur Transportrichtung weisende horizontale zweite Drehachse.

In der Fig. 1 sind die Schritte des grundlegenden erfindungsgemäßen Verfahrens zum automatisierten Kommissionieren von Packstücken 1 auf einen Ladungsträger 2 anhand eines schematischen Flussdiagramms dargestellt.

In einem ersten Verfahrensschritt S1 erfolgt ein automatisches Erstellen eines Packmusters für das Ablegen von Packstücken 1 auf einem vorbestimmten Ladungsträger 2 auf Grundlage einer vorgegebenen Menge an bestimmten Packstücken 1 mittels eines Palettieralgorithmus auf einem elektronischen Rechner 3.

In einem zweiten Verfahrensschritt S2 erfolgt ein automatisches Sequenzieren der einzelnen Packstücke 1 der vorgegebenen Menge an bestimmten Packstücken 1 in einer zum Aufbauen eines Paketstapels der Packstücke 1 auf dem Ladungsträger 2 in dem erstellten Packmuster geeigneten Reihenfolge und in einer jeweils aufgrund des erstellten Packmusters vorgegebenen Orientierung jeden einzelnen Packstückes 1.

In einem dritten Verfahrensschritt S3 erfolgt ein automatisches Transportieren der Packstücke 1 in der sequenzierten Reihenfolge aus einem Lagerbereich 4 an einen Kommissionierarbeitsplatz 5, an dem die herantransportieren Packstücke 1 gemäß dem erstellten Packmuster auf den Ladungsträger 2 aufzubauen sind.

In einem vierten Verfahrensschritt S4 erfolgt ein automatisches Umorientieren wenigstens eines transportierten sequenzierten Packstücks 1 während des Transportierens oder im Stillstand zwischen einer vorausgehenden Transportbewegung und einer nachfolgenden Transportbewegung, beispielsweise auf einer Fördereinrichtung 6, um eine in Transportrichtung T weisende erste Drehachse D1 (Fig. 4) und/oder um eine quer zur Transportrichtung T weisende horizontale zweite Drehachse D2.

In der Fig. 2 sind die Schritte der speziellen Ausführungsvariante des Verfahrens zum automatisierten Kommissionieren von Packstücken 1 auf einen Ladungsträger 2 anhand eines weiteren schematischen Flussdiagramms dargestellt.

In einem ersten Verfahrensschritt V1 der speziellen Ausführungsvariante des Verfahrens erfolgt ein automatisches Erstellen eines Packmusters für das Ablegen von Packstücken 1 auf einem vorbestimmten Ladungsträger 2 auf Grundlage einer vorgegebenen Menge an bestimmten Packstücken 1 mittels eines Palettieralgorithmus auf einem elektronischen Rechner **3.**

In einem zweiten Verfahrensschritt V2 der speziellen Ausführungsvariante des Verfahrens erfolgt ein automatisches Sequenzieren der einzelnen Packstücke 1 der vorgegebenen Menge an bestimmten Packstücken 1 in einer zum Aufbauen eines Paketstapels der Packstücke 1 auf dem Ladungsträger 2 in dem erstellten Packmuster geeigneten Reihenfolge und in einer jeweils aufgrund des erstellten Packmusters vorgegebenen Orientierung jeden einzelnen Packstückes 1.

In einem dritten Verfahrensschritt V3 der speziellen Ausführungsvariante des Verfahrens erfolgt ein automatisches Transportieren der Packstücke 1 in der sequenzierten Reihenfolge und in einer jeweils vorgegebenen Orientierung jeden einzelnen Packstückes 1 aus einem Lagerbereich 4 an einen Kommissionierarbeitsplatz 5, an dem die herantransportieren Packstücke 1 gemäß dem erstellten Packmuster auf den Ladungsträger 2 aufzubauen sind.

In einem vierten Verfahrensschritt V4 der speziellen Ausführungsvariante des Verfahrens erfolgt ein Ausselektieren wenigstens eines einzelnen Packstückes 1 aus der sequenzierten Reihenfolge während des automatischen Transportierens der Packstücke 1 und Entfernen des wenigstens einen ausselektierten Packstückes 1 aus der transportierten sequenzierten Reihenfolge an Packstücken 1.

In einem fünften Verfahrensschritt V5 der speziellen Ausführungsvariante des Verfahrens erfolgt ein automatisches Neuerstellen eines geänderten Packmusters für das Ablegen der transportierten sequenzierten Packstücke 1 ohne das wenigsten eine ausselektierte Packstück 1 auf dem Ladungsträger 2 mittels des Palettieralgorithmus auf dem elektronischen Rechner 3 unter einer Neuberechnung der Orientierung der auf dem Ladungsträger 2 abzulegenden Packstücke 1.

In einem sechsten Verfahrensschritt V6 der speziellen Ausführungsvariante des Verfahrens erfolgt ein automatisches Umorientieren des wenigstens einen transportierten sequenzierten Packstücks 1 während des Transportierens gemäß der neuberechneten Orientierung des betreffenden einzelnen Packstückes 1.

Das automatische Neuerstellen des geänderten Packmusters für das Ablegen der transportierten sequenzierten Packstücke 1 ohne das wenigsten eine ausselektierte Packstück 1 auf dem Ladungsträger 2 kann insbesondere unter Beibehaltung der bereits sequenzierten Reihenfolge der transportierten sequenzierten Packstücke 1 erfolgen.

Die Fig. 3 bis Fig. 5 zeigen schematisch jeweils ein Kommissioniersystem 7, aufweisend ein Lager 4, einen Kommissionierarbeitsplatz 5 mit einem Ladungsträger 2, eine Umorientierungsvorrichtung 8 und/oder eine Umsetzvorrichtung 9, die im dargestellten Ausführungsbeispiel ein Roboterarm 9a sein kann, sowie eine Fördereinrichtung 6, die ausgebildet ist zum automatischen Transportieren von Packstücken 1 aus dem Lager 4 an den Kommissionierarbeitsplatz 5.

Das Kommissioniersystem 7 weist außerdem eine Kommissioniersteuerung 10 mit einem elektronischen Rechner 3 auf, der eingerichtet ist mittels eines Palettierungsalgorithmus Packmuster für das Ablegen von Packstücken 1 auf dem Ladungsträger 2 automatisch zu erstellen, wobei die Kommissioniersteuerung 10 ausgebildet und eingerichtet ist, ein Verfahren nach einem der beschriebenen Ausführungen durchzuführen.

Die Umorientierungsvorrichtung 8 kann dabei ausgebildet und eingerichtet sein, das Umorientieren des wenigstens einen transportierten sequenzierten Packstücks 1 während des Transportierens aus seiner Ausgangsorientierung um die in Transportrichtung T weisende erste Drehachse D1 und/oder um die quer zur Transportrichtung T weisende horizontale zweite Drehachse D2 in eine Zwischenorientierung auszuführen, in der das umorientierte Packstück 1 entlang einer Zwischentransportstrecke weitertransportiert wird.

Mittels einer weiteren Umorientierungsvorrichtung 8a kann anschließend ein erneutes Umorientieren des wenigstens einen transportierten sequenzierten Packstücks 1 um die in Transportrichtung T weisende erste Drehachse D1 und/oder um die quer zur Transportrichtung T weisende horizontale zweite Drehachse D2 in die Ausgangsorientierung oder in eine von der Ausgangsorientierung und der Zwischenorientierung verschiedenen Übergabeorientierung am Kommissionierarbeitsplatz 5 durch die Umorientierungsvorrichtung 8a ausgeführt werden.

Das automatische Umorientieren des wenigstens einen transportierten sequenzierten Packstücks 1 während des Transportierens, um die in Transportrichtung T weisende erste Drehachse D1 und/oder um die quer zur Transportrichtung T weisende horizontale zweite Drehachse D2, kann mittels der Umorientierungsvorrichtung 8 erfolgen, welche das umzuorientierende Packstück 1 während seiner Transportbewegung auf der Fördereinrichtung 6 umorientiert.

Wie in Fig. 5 schematisch aufgezeigt ist, kann als die Umorientierungsvorrichtung 8 oder die weitere Umorientierungsvorrichtung 8a ein automatisch gehandhabter Greifer 11 verwendet werden, der das Packstück 1 von der Fördereinrichtung 6 anhebt, durch eine Greifbewegung umorientiert und in der geänderten Orientierung wieder auf der Fördereinrichtung 6 ablegt.

Das automatische Umorientieren des wenigstens einen transportierten sequenzierten Packstücks 1 um die in Transportrichtung T weisende erste Drehachse D1 und/oder um die quer zur Transportrichtung T weisende horizontale zweite Drehachse D2 kann somit auch mittels der Umsetzvorrichtung 9 erfolgen, die im vorliegenden Ausführungsbeispiel ein Roboterarm 9a ist, welcher das umzuorientierende Packstück 1 an dem Kommissionierarbeitsplatz 5 von der Fördereinrichtung 6 entnimmt, um es auf den Ladungsträger 2 umzusetzen, wobei der Roboterarm 9a das erfasste Packstück 1 während des Umsetzens umorientiert.

Als die Umsetzvorrichtung 9 kann somit ein automatisch angesteuerter Roboterarm 9a verwendet werden, der das Packstück 1 von der Fördereinrichtung 6 entnimmt, durch eine automatische Änderung der Pose des Roboterarms 9a das Packstück 1 umorientiert und in der geänderten Orientierung auf dem Ladungsträger 2 absetzt.

## Patentansprüche

1. Verfahren zum automatisierten Kommissionieren von Packstücken (1) auf einen Ladungsträger (2), aufweisend die Schritte:
- automatisches Erstellen eines Packmusters für das Ablegen von Packstücken (1) auf einem vorbestimmten Ladungsträger (2) auf Grundlage einer vorgegebenen Menge an bestimmten Packstücken (1) mittels eines Palettieralgorithmus auf einem elektronischen Rechner (3),
- automatisches Sequenzieren der einzelnen Packstücke (1) der vorgegebenen Menge an bestimmten Packstücken (1) in einer zum Aufbauen eines Paketstapels der Packstücke (1) auf dem Ladungsträger (2) in dem erstellten Packmuster geeigneten Reihenfolge und in einer jeweils aufgrund des erstellten Packmusters vorgegebenen Orientierung jeden einzelnen Packstückes (1),
- automatisches Transportieren der Packstücke (1) in der sequenzierten Reihenfolge aus einem Lagerbereich an einen Kommissionierarbeitsplatz (5), an dem die herantransportieren Packstücke (1) gemäß dem erstellten Packmuster auf den Ladungsträger (2) aufzubauen sind,
- automatisches Umorientieren wenigstens eines transportierten sequenzierten Packstücks (1) während des Transportierens, um eine in Transportrichtung (T) weisende erste Drehachse (D1) und/oder um eine quer zur Transportrichtung (T) weisende horizontale zweite Drehachse (D2).

2. Verfahren nach Anspruch 1, **gekennzeichnet durch** ein Umorientieren des wenigstens einen transportierten sequenzierten Packstücks (1) während des Transportierens, oder im Stillstand zwischen einer vorausgehenden Transportbewegung und einer nachfolgenden Transportbewegung, aus seiner Ausgangsorientierung um die in Transportrichtung (T) weisende erste Drehachse (D1) und/oder um die quer zur Transportrichtung (T) weisende horizontale zweite Drehachse (D2) in eine Zwischenorientierung, in der das umorientierte Packstück (1) entlang einer Zwischentransportstrecke weitertransportiert wird und anschließendes erneutes Umorientieren des wenigstens einen transportierten sequenzierten Packstücks (1) um die in Transportrichtung (T) weisende erste Drehachse (D1) und/oder um die quer zur Transportrichtung (T) weisende horizontale zweite Drehachse (D2) in die Ausgangsorientierung oder in eine von der Ausgangsorientierung und der Zwischenorientierung verschiedenen Übergabeorientierung am Kommissionierarbeitsplatz (5).

3. Verfahren nach Anspruch 1 oder 2, **dadurch gekennzeichnet, dass** das automatische Umorientieren des wenigstens einen transportierten sequenzierten Packstücks (1) während des Transportierens, um die in Transportrichtung (T) weisende erste Drehachse (D1) und/oder um die quer zur Transportrichtung (T) weisende horizontale zweite Drehachse (D2), mittels einer Umorientierungsvorrichtung (8) erfolgt, welche das umzuorientierende Packstück (1) während seiner Transportbewegung oder im Stillstand zwischen einer vorausgehenden Transportbewegung und einer nachfolgenden Transportbewegung auf einer Fördereinrichtung (6) umorientiert.

4. Verfahren nach Anspruch 3, **dadurch gekennzeichnet, dass** als die Umorientierungsvorrichtung (8) ein automatisch gehandhabter Greifer (11) verwendet wird, der das Packstück (1) von der Fördereinrichtung (6) anhebt oder auf der Fördereinrichtung (6) abstützend greift und abkippt, durch eine Greifbewegung umorientiert und in der geänderten Orientierung wieder auf der Fördereinrichtung (6) ablegt.

5. Verfahren nach Anspruch 1 oder 2, **dadurch gekennzeichnet, dass** das automatische Umorientieren des wenigstens einen transportierten sequenzierten Packstücks (1) um die in Transportrichtung (T) weisende erste Drehachse (D1) und/oder um die quer zur Transportrichtung (T) weisende horizontale zweite Drehachse (D2), mittels einer Umsetzvorrichtung (8) erfolgt, welche das umzuorientierende Packstück (1) an dem Kommissionierarbeitsplatz (5) von einer Fördereinrichtung (6) entnimmt, um es auf den Ladungsträger (2) umzusetzen, und die Umsetzvorrichtung (8) das erfasste Packstück (1) während des Umsetzens umorientiert.

6. Verfahren nach Anspruch 5, **dadurch gekennzeichnet, dass** als die Umsetzvorrichtung (8) ein automatisch angesteuerter Roboterarm (9a) verwendet wird, der das Packstück (1) von der Fördereinrichtung (6) entnimmt, durch eine automatische Änderung der Pose des Roboterarms (9a) das Packstück (1) umorientiert und in der geänderten Orientierung auf die Fördereinrichtung (6) oder auf den Ladungsträger (2) absetzt.

7. Verfahren nach einem der Ansprüche 1 bis 6, **gekennzeichnet durch** die zusätzlichen Schritte:
- automatisches Transportieren der Packstücke (1) in der sequenzierten Reihenfolge und in einer jeweils vorgegebenen Orientierung jeden einzelnen Packstückes (1) aus einem Lagerbereich (4) an einen Kommissionierarbeitsplatz (5), an dem die herantransportieren Packstücke (1) gemäß dem erstellten Packmuster auf den Ladungsträger (2) aufzubauen sind,
- Ausselektieren wenigstens eines einzelnen Packstückes (1) aus der sequenzierten Reihenfolge während des automatischen Transportierens der Packstücke (1) und Entfernen des wenigstens einen ausselektierten Packstückes (1) aus der transportierten sequenzierten Reihenfolge an Packstücken (1),
- automatisches Neuerstellen eines geänderten Packmusters für das Ablegen der transportierten sequenzierten Packstücke (1) ohne das wenigsten eine ausselektierte Packstück (1) auf dem Ladungsträger (2) mittels des Palettieralgorithmus auf dem elektronischen Rechner (3) unter einer Neuberechnung der Orientierung der auf dem Ladungsträger (2) abzulegenden Packstücke (1),
- automatisches Umorientieren des wenigstens einen transportierten sequenzierten Packstücks (1) während des Transportierens gemäß der neuberechneten Orientierung des betreffenden einzelnen Packstückes (1).

8. Verfahren nach Anspruch 7, **dadurch gekennzeichnet, dass** das automatische Neuerstellen des geänderten Packmusters für das Ablegen der transportierten sequenzierten Packstücke (1) ohne das wenigsten eine ausselektierte Packstück (1) auf dem Ladungsträger (2) unter Beibehaltung der bereits sequenzierten Reihenfolge der transportierten sequenzierten Packstücke (1) erfolgt.

9. Kommissioniersystem (7), aufweisend ein Lager (4), einen Kommissionierarbeitsplatz (5) mit einem Ladungsträger (2), eine Umorientierungsvorrichtung (8) und/oder eine Umsetzvorrichtung (9), sowie eine Fördereinrichtung (6), die ausgebildet ist zum automatischen Transportieren von Packstücken (1) aus dem Lager (4) an den Kommissionierarbeitsplatz (5) und eine Kommissioniersteuerung (10) mit einem elektronischen Rechner (3), der eingerichtet ist mittels eines Palettierungsalgorithmus Packmuster für das Ablegen von Packstücken (1) auf dem Ladungsträger (2) automatisch zu erstellen, wobei die Kommissioniersteuerung (10) ausgebildet und eingerichtet ist, ein Verfahren nach einem der Ansprüche 1 bis 8 durchzuführen.

10. Computerprogrammprodukt, aufweisend einen maschinenlesbaren Träger, auf dem Programmcode gespeichert ist, der von einer Kommissioniersteuerung (10) eines Kommissioniersystems (7), insbesondere eines Kommissioniersystems (7) nach Anspruch 9, auslesbar ist und der die Kommissioniersteuerung (10) ausbildet und/oder einrichtet, ein Verfahren nach einem der Ansprüche 1 bis 8 durchzuführen, wenn der Programmcode von der Kommissioniersteuerung (10) ausgeführt wird.
